Europäisches Patentamt

European Patent Office

Office européen des brevets

(11) Veröffentlichungsnummer: **0 284 857 B1**

(12) **EUROPÄISCHE PATENTSCHRIFT**

(45) Veröffentlichungstag der Patentschrift: **21.11.91**

(51) Int. Cl.5: **A01F 15/00**

(21) Anmeldenummer: **88103831.9**

(22) Anmeldetag: **10.03.88**

(54) **Rollballenpresse für Erntegut.**

(30) Priorität: **30.03.87 DE 3710550**

(43) Veröffentlichungstag der Anmeldung:
**05.10.88 Patentblatt 88/40**

(45) Bekanntmachung des Hinweises auf die
Patenterteilung:
**21.11.91 Patentblatt 91/47**

(84) Benannte Vertragsstaaten:
**AT BE DE FR GB IT SE**

(56) Entgegenhaltungen:
EP-A- 0 115 608          EP-A- 0 156 041
EP-A- 0 189 232          DE-A- 2 634 638
GB-A- 2 003 716          GB-A- 2 137 927

(73) Patentinhaber: **P.J. Zweegers en Zonen Landbouwmachinefabriek B.V.**
**Nuenenseweg 165**
**NL-5667 KP Geldrop(NL)**

(72) Erfinder: **Quataert, Pierre**
**Berg 73**
**Nuenen 73(NL)**

(74) Vertreter: **Patentanwälte Grünecker, Kinkeldey, Stockmair & Partner**
**Maximilianstrasse 58**
**W-8000 München 22(DE)**

## Beschreibung

Die Erfindung betrifft eine Rollballenpresse der im Oberbegriff des Patentanspruchs 1 angegebenen Art.

Bei einer aus der EP-A-01 15 608 bekannten Rollballenpresse für kontinuierlichen Betrieb ist die Wickelkammer durch das Trennelement in eine kleinere Vorkammer und eine größere Bindekammer trennbar. Das mit Rollen und einer endlosen biegsamen Bahn ausgestattete Trennwandelement ist Vertikal auf- und abverschiebbar. Es hält beim Einbinden und Auswerfen des fertigen Rollballens das weiterhin aufgenommene Erntegut in der Vorkammer. Das Trennwandelement wird dann bei geleerter und wieder Verschlossener Bindekammer nach oben Verschoben, bis das Erntegut aus der Vorkammer in die Bindekammer überführt wird. Der bauliche Aufwand für das Trennwandelement und den Antrieb ihrer Wickelelemente ist hoch. Das gesamte Volumen der aus Vorkammer und Bindekammer bestehenden Wickelkammer ist erheblich größer als das Volumen des fertigen Rollballens. Die nicht zum Einbinden des Rollballens genutzte Vorkammer vergrößert das Gehäuse und erhöht das Gesamtgewicht der Rollballenpresse unzweckmäßig.

Eine aus der GB-A-2 137 927 bekannte, im kontinuierlichen Betrieb einsetzbare Rollballenpresse weist im Zuführkanal eine Vorkammer zum Zwischenspeichern des während des Einbindens und Auswerfens des fertigen Rollballens weiterhin zugeführte Erntegut auf. Im Zuführkanal sind bewegliche Elemente Vorgesehen, um die Zufuhr Von Erntegut zur Wickelkammer vorübergehend zu unterbrechen, Da während des Einbindens und Auswerfens des fertigen Rollballens bis zur Hälfte des im nächsten Rollballen enthaltenen Erntegutes zugeführt werden kann, ist die Vorkammer groß dimensioniert. Das Gehäuse der Rollballenpresse ist unzweckmäßig groß und schwer.

Bei einer aus der EP-A-01 56 041 bekannten Rollballenpresse für kontinuierlichen Betrieb sind im Gehäuse zwei Wickelkammern vorgesehen, wobei in der ersten Wickelkammer ein Rollballenrohling gebildet wird, der in die zweite Wickelkammer übergeführt und zu Ende gewickelt wird, während in der ersten Wickelkammer ein neuer Rollballen begonnen wird.

Der Erfindung liegt die Aufgabe zugrunde, eine Rollballenpresse der eingangs genannten Art zu schaffen, die sich durch einen einfachen und kompakten Aufbau auszeichnet.

Die gestellte Aufgabe wird erfindungsgemäß durch die im kennzeichnenden Teil des Patentanspruchs 1 angegebenen Merkmale gelöst.

Bei dieser Ausbildung ergibt sich durch Wegfall einer Vorkammer eine Rollballenpresse, die so einfach und kompakt ist, wie eine diskontinuierlich arbeitende Rollballenpresse. Die Wickelkammer ist etwa gleichgroß wie der fertige Rollballen. Da das Trennwandelement den Zwischenspeicher im Inneren der Wickelkammer herstellt und das während des Einbindens und Auswerfens des fertigen Rollballens zugeführte Erntegut Vom fertigen Rollballen getrennt sammelt, während der fertige Rollballen eingebunden und ausgeworfen werden muß, läßt sich die Rollballenpresse dennoch kontinuierlich betreiben. Sobald das sich der Kontur des fertigen Rollballens angepaßte Trennwandelement mit seinem Einführende von der Fangund Haltevorrichtung ergriffen ist, kann das weiterhin zugeführte Erntegut nicht mehr zum fertigen Rollballen gelangen und dessen Einbinden stören, obwohl es nach wie vor in die Wickelkammer eingebracht wird. Es hält das Trennwandelement das Erntegut beim Auswerfen des fertigen und eingebundenen Rollballens in der Wickelkammer, ehe es darin nach dem Auswerfen weiterverarbeitet wird. In ihren Außenabmessungen und im Gesamtgewicht unterscheidet sich die Rollballenpresse kaum von einer nur diskontinuierlich arbeitenden Rollballenpresse.

Eine zweckmäßige Ausführungsform geht aus Anspruch 2 hervor. Das bahnförmige Trennwandelement wird mit der Vorrichtung nur für die Zeitdauer in die Wickelkammer eingeführt, während der der Zwischenspeicher zum Aufnehmen des weiterhin zugeführten Ernteguts benötigt wird, und danach wieder herausgezogen.

Zweckmäßig ist das Merkmal von Anspruch 3, weil das Fangelement nicht nur das Ergreifen des Einführendes des Trennwandelementes vereinfacht, sondern auch einen Mitnehmer bildet, mit dem das Einführende vom Rollballen bis zur Fang- und Haltevorrichtung gebracht wird und das Trennwandelement nachzieht.

Günstig ist ferner die Ausführungsform von Anspruch 4, weil diese Materialien es erlauben, daß das Trennwandelement in der Wickelkammer eine den Zwischenspeicher begrenzende sich vergrößernde Schlaufe bildet. Das Trennwandelement ist biegeelastisch, dabei zugfest und gleitfreundlich, so daß es mit geringem Verschleiß eingesetzt werden kann.

Vorteilhaft ist ferner die Ausführungsform gemäß Anspruch 5. Das Trennwandelement wird im Gehäuse wie ein Springrollo aufgewickelt gehalten, wird mit dem Einführende an den Rollballen übergeben, von diesem abgewickelt und - während der Rollballen ausgeworfen wird - zurückgezogen und gespannt, was den Vorteil hat, daß das Trennwandelement auf den Rollballen eine Kraft in Auswurfrichtung ausübt.

Zweckmäßig ist die Maßnahme von Anspruch 6. Die Abzugsbremse kann einen gewollten Schlupf zwischen dem Trennwandelement und dem fertigen Rollballen erzeugen, der das Auswerfen des Rollballens unterstützt und das Erntegut verdichtet. Die Rückzugsfeder sorgt, ggfs. selbsttätig dafür, daß das Trennwandelement während der Auswurfbewegung des fertigen Rollballens gespannt wird.

Eine baulich einfache und funktionssichere Ausführungsform geht weiterhin aus Anspruch 7 hervor. Der Fanghaken wird in die Wickelkammer eingeführt, wenn sich der Querstab nähert. Während des Aufbaus des Rollballens kann er entfernt sein, um nicht zu stören.

Wichtig ist ferner der Gedanke von Anspruch 8, weil damit erreicht wird, daß das Bindemittel im Stoßbereich seiner Enden geschlossen werden kann, bzw. daß sich sogar ein breiter Überlappungsbereich der Bindemittelenden ergibt, was für den festen Sitz des Bindemittels auf dem fertigen Rollballen wichtig ist.

Um das Konzept bewährter Rollballenpressen nicht gravierend ändern zu müssen, ist der Gedanke von Anspruch 9 wichtig. Bei gemeinsamer Zuführöffnung ist es zweckmäßig, das Bindemittel voreilend zum Trennwandelement einlaufen zu lassen.

Wichtig ist ferner der Gedanke von Anspruch 10. Die Fang- und Haltevorrichtung ist zweckmäßigerweise in Wickelrichtung nur soweit hinter der Mündung des Zuführkanals angeordnet, daß sich eine ausreichende Größe für den Zwischenspeicher ergibt. Es kann das Trennwandelement eine Schlaufe bilden, die jedoch die Zuführöffnung für das Bindemittel nicht erreichen soll.

Eine besonders einfache Ausführungsform geht aus Anspruch 11 hervor. Die Schwerkraft wird benutzt, um das Einführende des Trennwandelementes und das Bindemittel in die Wickelkammer zu bringen, so daß keine zusätzlichen Antriebs- oder Zuführelemente benötigt werden. Bei diesen Lagen der Zuführöffnungen und der Fang- und Haltevorrichtung ergibt sich der Vorteil, daß das beim Auswerfen des Rollballens gespannte Trennwandelement die Wickelkammer nahezu mittig durchsetzt und eine kräftige Auswurfkomponente für den Rollballen erzeugt.

Weitere, wichtige Ausführungsalternativen einer Rollballenpresse, bei der die Auswurföffnung durch ein schalenförmiges, oben am Gehäuse schwenkbar gelagertes Tor verschließbar ist, gehen aus den Ansprüchen 12 und 13 hervor. Gemäß Anspruch 12 braucht das Trennwandelement nur über einen kleinen Teil des Innenumfangs der Wickelkammer mitbewegt zu werden, weil noch während des Aufbringens des Bindemittels das weiterhin zugeführte Erntegut in den Rollballen eingebracht wird. Erst wenn das Vorderende des Bindemittels in die Nähe der Mündung des Zuführkanals kommt, wird das Trennwandelement eingeführt, das dann das weiterhin zugeführte Erntegut vom fertigen Rollballen trennt. Dies bedeutet auch, daß im Zwischenspeicher nur eine kleine Menge an Erntegut aufgenommen werden muß, und daß sich trotzdem ein großer Überlappungsbereich für das Bindemittel erzielen läßt. Gemäß Anspruch 13 wird der Rollballen nahezu vollständig vom Trennwandelement eingehüllt, ausgenommen im Spalt zwischen der Fangvorrichtung und dem Zuführbereich des Trennwandelementes, in dem die Enden des Bindemittels verbunden oder überlappt werden. Die Mündung des Zuführkanals wird nur für eine kurze Zeitspanne durch das Trennwandelement abgedeckt, so daß nur eine geringe Menge Erntegut nachgefördert und im Zwischenspeicher gesammelt wird. Bis dahin wird nahezu über die gesamte Umdrehung des Rollballens Erntegut noch unter das Bindemittel eingebracht. Sobald die Enden des Bindemittels verbunden sind, wird nach Öffnen des Tors der Rollballen zügig hinausbefördert, wobei das gegen das Trennwandelement drückende, nachgeförderte Erntegut das Auswerfen unterstützt.

Zweckmäßig ist die Ausführungsform von Anspruch 14, weil die Zuführer für ein getimtes Zuführen des Bindemittels und des Trennwandelementes sorgen.

Eine weitere wichtige Ausführungsform geht aus Anspruch 15 hervor. Der austretende Rollballen wird auf der unteren Torhälfte zum Boden geleitet bzw. beim Verschwenken der unteren Torhälfte über eine schräge Ebene nach unten gezwungen. Die obere Torhälfte ist leicht und leichter beweglich als ein einteiliges oben angelenktes Tor, so daß die Bewegungsantriebe für beide Torhälften einfacher sind.

Das gehäusefeste Preßelement bildet gemäß Anspruch 16 sozusagen einen Übergang zur unteren Torhälfte und beschleunigt den Auswurfvorgang.

Eine weitere, zweckmäßige Ausführungsform geht aus Anspruch 17 hervor. Die Torhälften beginnen sich zu öffnen, wenn ein vorherbestimmter Verdichtungsgrad im Rollballen erreicht wird, der durch den Reaktionsdruck auf die Torhälften feststellbar ist. Bei zunehmender Füllung des Zwischenspeichers werden die Torhälften sukzessive aufgedrückt, wodurch sich ohne Einfluß auf die Gesamtgröße der Rollballenpresse eine Vergrößerung des Fassungsvermögens der Wickelkammer ergibt, die gerade zum Aufnehmen des zugeführten Ernteguts im Zwischenspeicher zweckmäßig ist. Dies ist ein besonders wichtiger Aspekt der Erfindung.

Günstig ist dabei das Merkmal von Anspruch 18, weil bei dieser Position der Fang- und Halteeinrichtung das beim Auswerfen gespannte Trennwandelement einen zusätzlichen Auswurfimpuls auf den Rollballen ausübt.

Eine weitere, zweckmäßige Ausführungsform geht aus Anspruch 19 hervor. Die relativ zueinander beweglichen Einzelabschnitte bilden bei geöffnetem Tor eine gestreckte Ablaufplatte, auf der der Rollenballen schonend zum Boden geleitet wird.

Günstig ist hierbei auch die Maßnahme von Anspruch 20, weil ein großes Zwischenspeichervolumen geschaffen wird. Das Einbinden des Rollballens in das Bindemittel wird abgeschlossen, nachdem das Einführende des Trennwandelementes die Fang- und Haltevorrichtung am letzten Einzelelement erreicht, so daß dann sofort mit dem Auswerfen des fertigen Rollballens begonnen werden kann. Der große wirksame Hebelarm des gespannten Trennwandelementes ist für die Auswurfbewegung des Rollballens günstig.

Anhand der Zeichnung werden nachfolgend Ausführungsformen des Erfindungsgegenstandes erläutert. Es zeigen:

Fig. 1　　eine Rollballenpresse im Längsschnitt,

Fig. 2,3,4　die Rollballenpresse von Fig. 1 in vereinfachter Darstellung während aufeinanderfolgender Arbeitsphasen,

Fig. 5　　ein Detail zu den vorhergehenden Fig.,

Fig. 6　　eine Detailvariante,

Fig. 7　　eine abgeänderte Ausführungsform einer Rollballenpresse,

Fig. 8　　eine weitere abgeänderte Ausführungsform einer Rollballenpresse,

Fig. 9,10　eine weitere Ausführungsform einer Rollballenpresse während zweier Arbeitsphasen,

Fig. 11　　eine weitere Ausführungsform einer Rollballenpresse, stark schematisiert, und

Fig. 12　　einen Ausschnitt aus einer weiteren Ausführungsform einer Rollballenpresse.

Die in den Fig. gezeigten Rollballenpressen 1, 1', 1", 1''', 1^IV und 1^V sind Rollballenpressen mit im wesentlichen fester Wickel- oder Preßkammer 7, d.h. einer Wickeloder Preßkammer, deren Größe sich beim Arbeiten der Rollballenpresse nicht verändert. Das nachstehend erläuterte Prinzip, einen Zwischenspeicher Z innerhalb der Wickelkammer 7 unmittelbar und nur vorübergehend auszubilden, läßt sich jedoch auch bei Rollballenpressen mit variabler Wickel- oder Preßkammer anwenden. Der besseren Verständigkeit halber wird jedoch dieses Prinzip nur anhand der Rollballenpressen mit fester Wickel- oder Preßkammer erläutert, weil es bei Rollballenpressen mit variabler Wickel- oder Preßkammer zeichnerisch schwierig darzustellen ist.

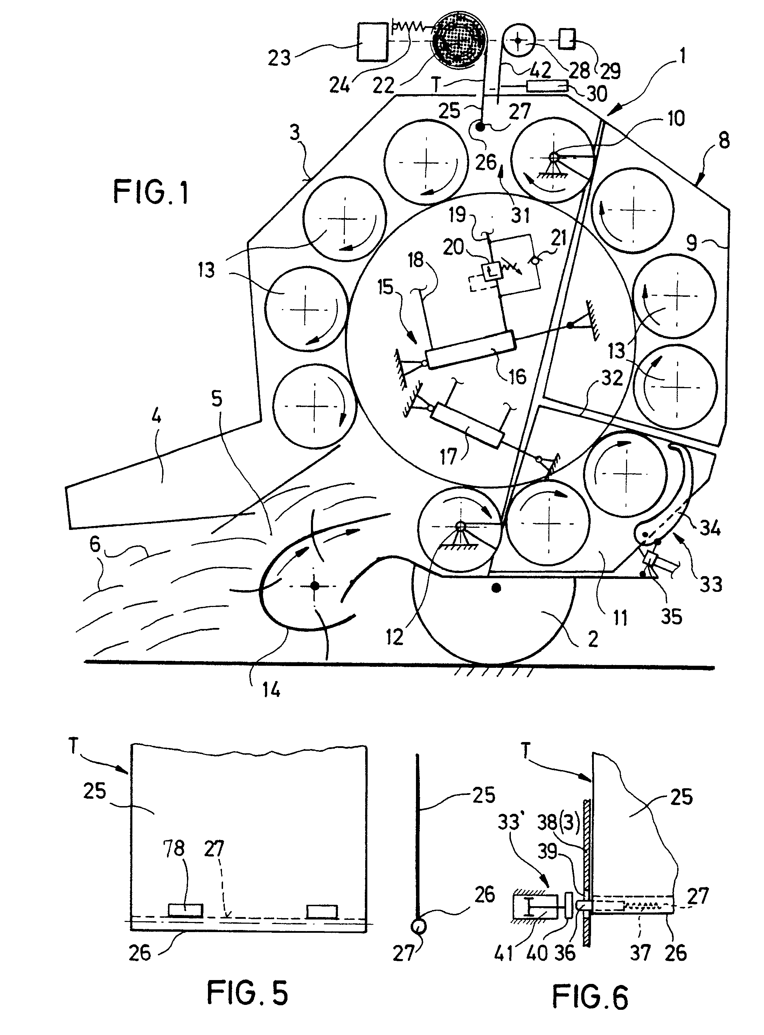

Gemäß Fig. 1 besteht die Rollballenpresse 1 aus einem auf Rädern 2 fahrbaren Gehäuse 3 mit einer Zugdeichsel 4. Die Rollballenpresse 1 wird üblicherweise von einem Schlepper gezogen und auch angetrieben. Unterhalb der Zugdeichsel 4 verläuft ein schräg aufwärts gerichteter Zuführkanal 5 für das Erntegut 6 bis ins Innere einer annähernd zylindrischen Wickelkammer 7. Dem Zuführkanal 5 gegenüberliegend ist eine Auswurföffnung vorgesehen, die durch ein Tor 8 verschließbar ist, das aus einer oberen Torhälfte 9 und einer unteren Torhälfte 11 besteht. Die obere Torhälfte 9 ist im Gehäuse 4 in einem oberen Bereich um eine Querachse 10 hochschwenkbar, während die untere Torhälfte 11 um eine nahe der Mündung des Zuführkanals 5 liegende Querachse 12 nach unten schwenkbar ist.

Die Wickelkammer 7 wird durch mit engen Zwischenabständen (etwas mehr als 1cm) in Umfangsrichtung verteilte Wickelwalzen 13 begrenzt, die in Richtung der Pfeile zur Drehung antreibbar sind. Die Antriebselemente und die Antriebe befinden sich an den in Fig. 1 nicht gezeigten Gehäuseseiten außerhalb der Wickelkammer. Die Wickelwalzen 13 haben zweckmäßigerweise eine geriffelte Oberfläche. Sie werden alle im gleichen Drehsinn angetrieben, so daß sich eine Wickelrichtung ergibt, die vom Tor 8 über den oberen Teil der Wickelkammer 7 nach unten nur Mündung des Zuführkanals 5 verläuft. Im Zuführkanal 5 ist eine Gutaufnahme- und Zuführvorrichtung 14 angeordnet, die kontinuierlich angetrieben wird und das Erntegut 6 kontinuierlich in die Wickelkammer 7 fördert. Aus diesem Grund kann die Rollballenpresse 1 im kontinuierlichen Betrieb gefahren werden.

Ebenfalls an den Gehäuseaußenseiten sind Schließantriebseinrichtungen 15 für das Tor 8 vorgesehen, die bei der gezeigten Ausführungsform einen doppelt wirkenden Hydraulikzylinder 16 für die obere Torhälfte 9 und einen doppelt wirkenden Hydraulikzylinder 17 für die untere Torhälfte 11 aufweisen, die am Gehäuse abgestützt sind. Mittels der Hydraulikzylinder 16, 17 läßt sich jede Torhälfte 9, 11 auf- und zuschwenken und in der Schließstellung mit voreingestellter Schließkraft halten. Dazu sind Hydraulikleitungen 18 und 19 zu den beiden Enden jedes Zylinders, z.B. des Hydraulikzylinders 16, vorgesehen, wobei in der Hydraulikleitung 19 zum Schließen der Torhälfte 9 ein einstellbares Druckbegrenzungsventil 20 vorgesehen ist, das durch ein Rückschlagventil 21 umgangen wird. Das Rückschlagventil 21 kann entsperrbar sein, damit durch Beaufschlagung der Hydraulikleitung 18 die Torhälfte 9 auch rasch geöffnet werden kann. Das Druckbegrenzungsventil 20 begrenzt den Druck derart, daß die Torhälfte 9 bei einem bestimmten Druck in der Wickelkammer 7 nachzugeben beginnt und seinen Gegendruck solange aufrechterhält, bis beispielsweise das Rückschlagventil 21 entsperrt wird und die Torhälfte 9 leicht hochgeschwenkt werden kann. Das gleiche Antriebsprinzip ist für die untere Torhälfte 11 vorgesehen. In beiden Torhälften 9, 11 sind Wickelwalzen 13 enthalten.

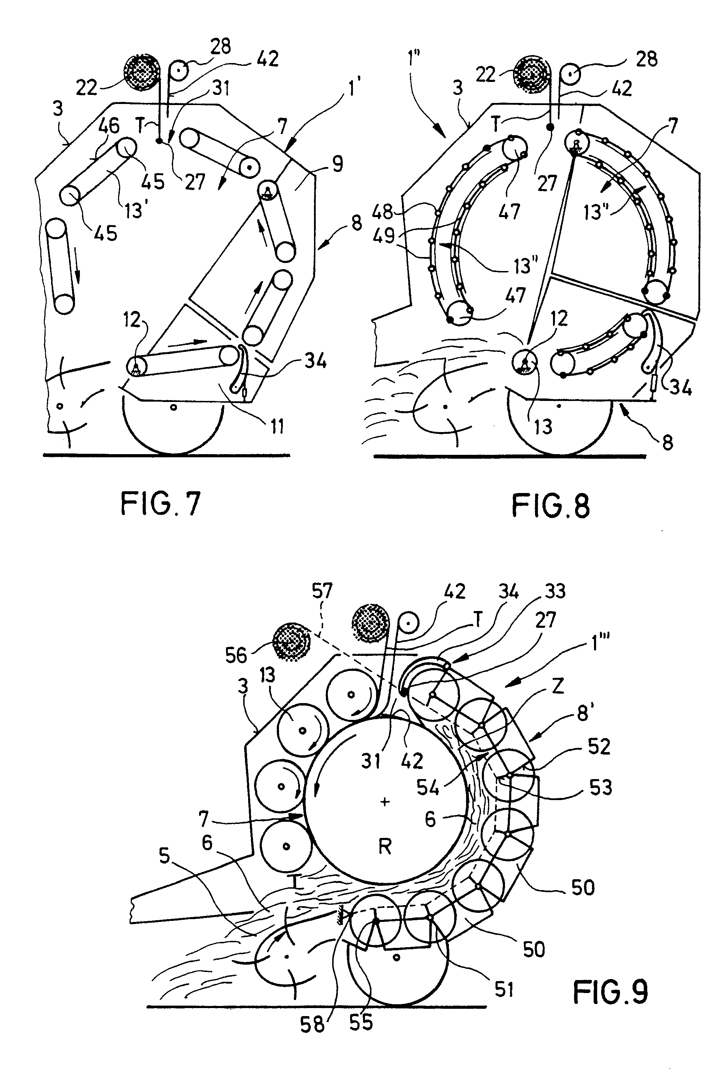

Oberhalb der Wickelkammer 7 ist am Gehäuse 3 ein Kern 22 drehbar gelagert, auf dem ein bahnförmiges Trennwandelement T aufgewickelt ist. Mit dem Kern 22 steht ein Drehantrieb 23 in Verbindung. Ferner kann eine Rückzugsfeder 24 vorgesehen sein, die das aufgewickelte Trennwandelement T wie ein Springrollo in Rückwickelrichtung beaufschlagt. Das Trennwandelement T, das z.B. eine Streichgewebebahn 25, d.h. ein Nylongewebe mit beidseitiger Kunststoffbeschichtung sein kann (s. auch die Fig. 5 und 6), hat die Breite der Wickelkammer 7 und ein Einführende 26, an dem ein Fangelement 27 befestigt ist.

In Wickelrichtung vor dem Kern 22 ist am Gehäuse eine Rolle 28 drehbar gelagert, auf der ein Bindemittel 42, z.B. eine Netzbahn, gespeichert ist. Die Rolle 28 steht mit einem Drehantrieb 29 in Verbindung, mit dem das Bindemittel 42 in die Wickelkammer 7 einführbar ist. Ferner ist eine Trennvorrichtung 30 vorgesehen, um das Bindemittel jeweils dann abzutrennen, wenn eine vorbestimmte Länge abgewickelt worden ist.

Anstelle der Rolle 28 mit den zugehörigen Komponenten kann auch eine andere Bindemittel-Bereithalte- und -zuführvorrichtung dort vorgesehen sein. Gegebenenfalls ist auch eine Einrichtung vorhanden, mit der die Enden des Bindemittels in üblicher Weise auf dem fertigen Rollballen verbunden werden.

Das Trennwandelement T und das Bindemittel 42 werden der Wickelkammer 7 durch eine Zuführöffnung 31 zwischen den beiden obersten Wickelwalzen 13 zugeführt, die etwas voneinander weggerückt sind. In der Zeichnung ist die Zuführöffnung 31 vergrößert gezeigt.

In der Schließstellung des Tores 8 begrenzen die Torhälften 9 und 11 eine Schließfuge 32, die etwas unterhalb der Horizontalebene liegt, in der sich die Mittelachse der Wickelkammer 7 befindet.

An der unteren Torhälfte 11 ist bei dieser Ausführungsform eine Fang- und Haltevorrichtung 33 für das Fangelement 27 des Trennwandelementes T vorgesehen. Diese weist beispielsweise schwenk- und verschiebbare Fanghaken 34 sowie einen Betätigungszylinder 35 auf. Der Fanghaken 34 ist im Bereich der Schließfuge 32 in die Wickelkammer 7 einführbar.

Die Ausbildung des Einführendes 26 des Trennwandelementes T ist aus Fig. 5 erkennbar. Das Fangelement 27 ist ein Querstab, der in die Bahn 25 des Trennwandelementes T eingeschlagen ist und sich im wesentlichen über die gesamte Bahnbreite erstreckt. Ausnehmungen 28 in der Bahn 25 erleichtern den vorgesehenen Fanghaken 34 der Halte- und Fangvorrichtung 33 das Ergreifen des Einführendes 26.

Fig. 6 deutet eine andere Ausbildung der Fangund Haltevorrichtung 33' an. Hierbei ist der Querstab 27 im Einführende 26 des Trennwandelementes T mit je einem teleskopisch ausfahrbaren Zapfen 36 an jedem Ende versehen, der durch eine Feder 37 nach außen gedrückt wird. Die Zapfen 36 gleiten entlang einer Gehäusewand 38 des Gehäuses 3, bis sie in Ausnehmungen 39 in der Gehäusewand 38 eintreten und gefangen werden. Ein Druckstempel 40 vor der Ausnehmung 39 ist mittels eines Zylinders 41 so betätigbar, daß er den Zapfen 36 wieder in die Ausnehmung 39 hineindrückt, so daß das Einführende 26 bzw. die Bahn 25 des Trennwandelementes T wieder aus der Halte- oder Fangstellung bewegt werden kann.

Anhand der Fig. 1 bis 3 wird nachstehend die Funktion der Rollballenpresse 1 erläutert.

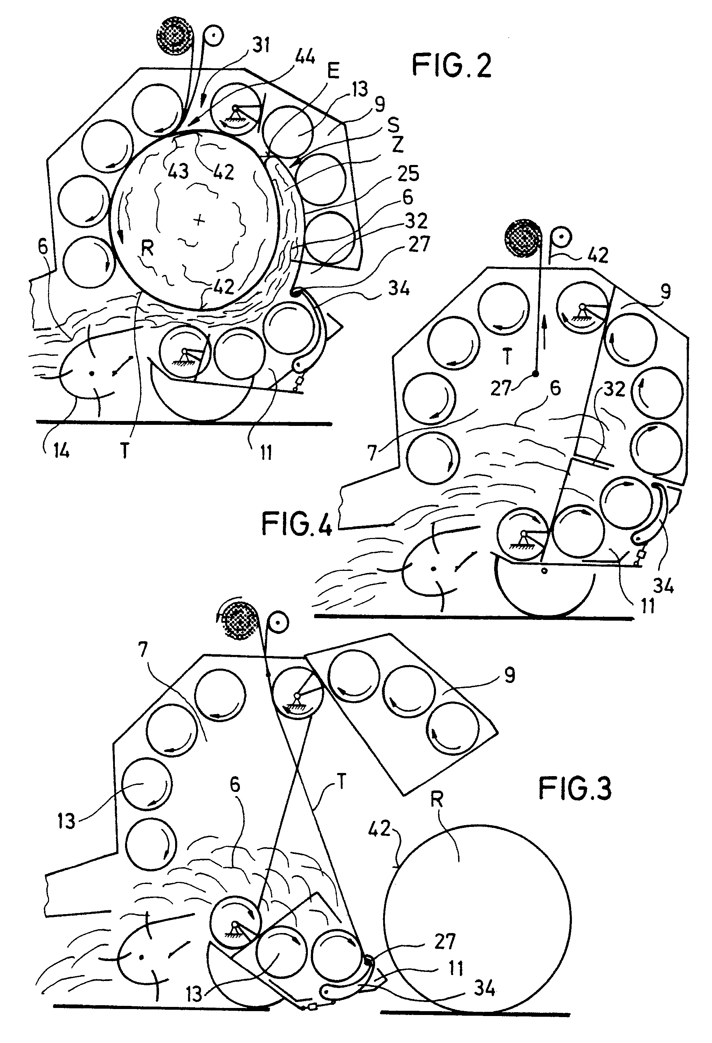

Zunächst ist gemäß Fig. 1 die Wickelkammer 7 leer. Das Erntegut 6 wird durch den Zuführkanal 5 in die Wickelkammer 7 gefördert. Das Tor 8 ist geschlossen. Die Torhälften 9 und 11 werden mit einem eingestellten Schließdruck geschlossen gehalten. Der Fanghaken 34 ist zurückgezogen. In der Zuführöffnung 31 hängt das Einführende 26 des Trennwandelementes und das freie Ende des Bindemittels 42. Das kontinuierlich zugeförderte Erntegut 6 füllt allmählich die Wickelkammer 7, wobei es in Wickelrichtung zirkuliert. Die Wickelkammer 7 füllt sich allmählich, wobei das Erntegut 6 verdichtet wird. Die Wickelwalzen 13 laufen. Das Erntegut 6 wird zunehmend verdichtet, so daß sich ein noch lockerer Rollballen bildet, dem das weiterhin zugeführte Erntegut in Form einer spiralförmigen Lage außen aufgelegt wird. Mit zunehmender Verdichtung des auf diese Weise gebildeten Rollballens wächst der Druck gegen das Tor 8. Ein nicht-gezeigter Druckfühler ermittelt den Zeitpunkt, an dem ein ausreichend vedichteter Rollballen vorliegt. Dann werden das Einführende 26 des Trennwandelementes T und gegebenenfalls voreilend das freie Ende des Bindemittels durch die Zuführöffnung 31 unter Schwerkrafteinfluß eingelassen. Gegebenenfalls läuft das Bindemittel 42 mit einer Voreilung ein. Der rotierende Rollballen nimmt das Bindemittel 42 und das Trennwandelement T mit, bis das Fangelement 27 die Mündung des Zuführkanals 5 passiert und in die Nähe der Schließfuge 32 gelangt. Dabei wickeln sich das Trennwandelement T und auch das Bindemittel 42 selbständig ab. Zu einem vorherbestimmten Zeitpunkt werden die Fanghaken 34 in die Wickelkammer 7 bewegt, so daß sie das Fangelement 27 ergreifen und die weitere Bewegung des Einführendes 26 des Trennwandelementes T mit dem Rollballen (s. Fig. 2) unterbinden. Da der Rollballen R aber weiterhin das Trennwandelement T mitnimmt, bildet sich zwischen dem Außenumfang des Rollballens R und den Wickelwalzen 13 der oberen Torhälfte 9 eine Schlaufe S (Fig. 2), deren Spitze E mit der halben Geschwindigkeit der Umlaufbewegung des Rollballens in Richtung zur Zuführöffnung 31 mitwandert. Sobald das Fangelement 27 die Mündung des Zuführkanals 5 passiert hat, wird das weiterhin zugeführte Erntegut 6 nicht mehr an den Rollballen R herangebracht, sondern durch das Trennwandelement T vom Rollballen getrennt. Das Trennwandelement T formt in seiner Schlaufe S einen Zwischenspeicher Z für das weiterhin zugeführte Erntegut. Da während dieser Bewegungsphase der Druck auf die Torhälften 9 und 11 zunimmt, beginnen diese langsam ihre Öffnungsbewegung unter Beibehalt einer Schließkraft, so daß sich die Wickelkammer 7 etwas vergrößert. Die sich öffnende Schließfuge 32 zwischen den Torhälften 9 und 11 läßt trotzdem kein Erntegut austreten, weil sie durch das Trennwandelement T verschlossen ist.

Sobald bei dieser Bewegung das mit 43 bezeichnete freie Ende des Bindemittels 42 im Bereich der Zuführöffnung 31 angelangt ist, oder kurz davor, wird das Bindemittel mittels der Trennvorrichtung 30 abgeschnitten und werden die Enden des Bindemittels 42 auf übliche Weise miteinander verbunden, gegebenenfalls in einem Überlappungsbereich 44.

Danach (Fig. 3) werden die beiden Hydraulikzylinder 16, 17 in Öffnungsrichtung der Torhälften 9, 11 beaufschlagt, so daß diese rasch zangenartig auseinanderschwenken. Die untere Torhälfte 11 wird soweit zum Boden abgesenkt, daß ihre Wickelwalzen 13, die sich weiterdrehen, eine schräg nach unten geneigte Ablaufbahn für den fertigen und in das Bindemittel 42 eingebundenen Rollballen bilden. Gleichzeitig wird, entweder über den Antrieb 23 oder über die Rückzugsfeder 24 das Trennwandelement gespannt und zurückgezogen, wodurch die Auswurfbewegung des Rollballens R unterstützt wird, so daß dieser auf dem Boden abgelegt wird. Das inzwischen zugeführte und bis dahin im Zwischenspeicher Z aufbewahrte Erntegut kann sich locker im durch das Trennwandelement T nach wie vor abgeschlossenen Teil der Wickelkammer 7 verteilen.

Danach (Fig. 4) werden die Hydraulikzylinder 16, 17 in Schließrichtung beaufschlagt und ziehen dabei die Torhälften 9, 11 in Richtung auf die Schließstellung zu. Dabei werden auch die Fanghaken 34 nach außen geschwenkt, so daß das Fangelement 27 des Trennwandelementes freigegeben wird. Das Trennwandelement T wird zurückgezogen, bis es wieder die Stellung von Fig. 1 eingenommen hat. Danach wird aus dem bereits in der Wickelkammer vorliegenden Erntegut wieder begonnen, einen neuen Rollballen zu formen.

Anstelle des Druckbegrenzungsventils 20 mit seinem parallelen Rückschlagventil 21 könnte auch ein außen angebrachtes, einstellbares Überdruckventil vorgesehen sein, das den erforderlichen Schließdruck in Abhängigkeit von der Qualität des verarbeiteten Ernteguts einstellen läßt.

Die Rollballenpresse 1' gemäß Fig. 7 unterscheidet sich von der vorher beschriebenen dadurch, daß die Wickel-oder Preßelemente 13' förderbandartige Einheiten sind, die die Wickelkammer 7 begrenzen. Jede Einheit besitzt zwei beabstandete, parallele Walzen 45, auf denen ein oder mehrere Riemen oder Bänder laufen. Der Querschnitt der Wickelkammer wird dadurch vieleckig, infolge des Anpreßdruckes des sich bildenden Rollballens biegen sich die Bänder 46 dann allerdings durch, so daß eine angenähert zylindrische Wickelkammerform trotzdem erreicht und ein zylindrischer Rollballen gebildet wird.

Die Rollballenpresse 1" enthält als Wickel- oder Preßelemente 13" wiederum förderbandartige Einheiten mit Antriebswalzen 47 und Stab- oder Gliederbändern 48, die zusätzlich in Führungskulissen 49 in Bogenform geführt werden. Der weitere Aufbau und die Funktion dieser Rollballenpresse 1" entspricht der von Fig. 1. Angrenzend an den Zuführkanal ist eine einzelne Wickelwalze 13 vorgesehen, deren Schwenkachse mit der Schwenkachse 12 der unteren Hälfte des Tors 8 zusammenfällt.

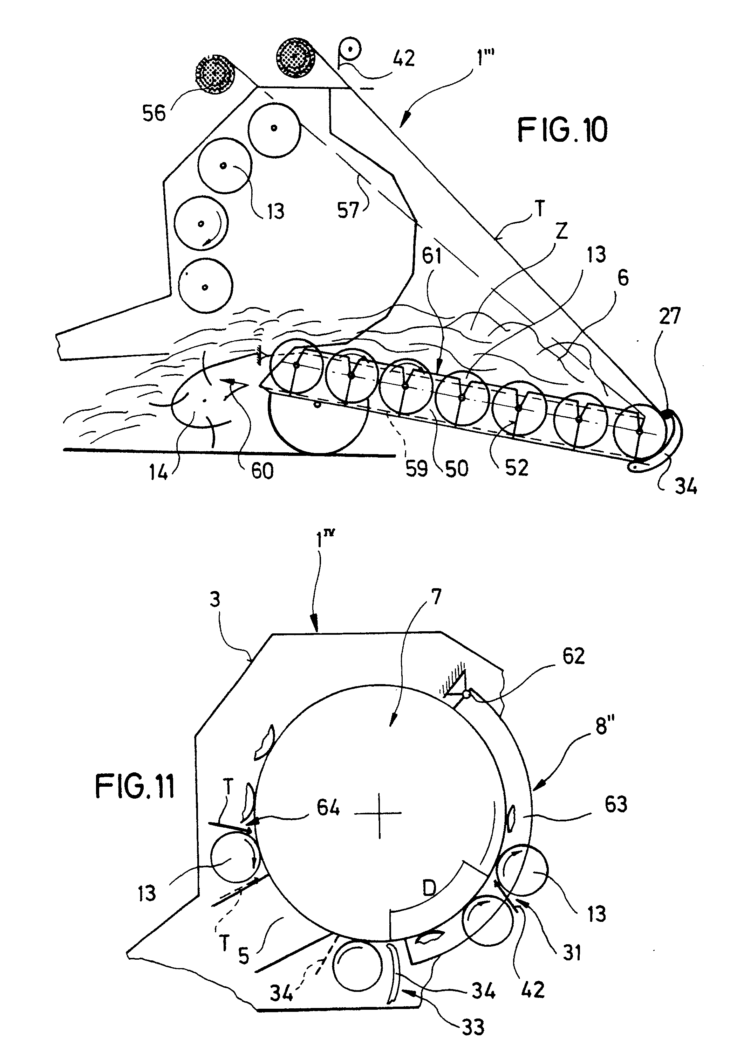

Die Rollballenpresse 1''' gemäß den Fig. 9 und 10 besitzt um den Umfang der Wickelkammer 7 verteilt nahe beieinanderliegende Wickelwalzen 13. Unterschiedlich ist die Ausgestaltung des Tores 8' der Wickelkammer 7 zum Auswerfen des Rollballens R. Und zwar ist das Tor 8' einteilig und um eine untenliegende Schwenkachse benachbart zur Mündung des Zuführkanals 5 schwenkbar. Das Tor 8' erstreckt sich bis zur Zuführöffnung 31 für das Trennwandelement T und das Bindemittel 42. Es besteht aus in Querrichtung steifen, kastenförmigen Einzelabschnitten 50, die über zur Achse der Wickelkammer 7 parallele Gelenkachsen 51 relativ zueinander abknickbar sind. Jeder Einzelabschnitt 50 besitzt eine äußere Anschlagfläche 52 und eine innere Anschlagfläche 53. Die Wickelwalzen 13 sind auf den Gelenkachsen 51 zwischen den Einzelabschnitten gelagert. In Fig. 9, bei geschlossenem Tor 8' bilden die Einzelabschnitte 50, die mit ihren Anschlagflächen 53 fest aneinanderliegen, eine Torschale 54 mit dem Krümmungsradius der Wickelkammer 7. Dazu verläuft zwischen den Einzelabschnitten 50 ein Zugglied 57, beispielsweise eine Kette oder ein Stahlseil, an jeder Seite, das im Gehäuse an einem Widerlager 58 verankert ist und auf eine gehäusefeste Trommel 56 aufwickelbar ist. Unter dem Zug des Zugelementes 57 wird die Form der Torschale 54 auch unter dem Innendruck des Rollballens R aufrechterhalten.

Die Fang- und Haltevorrichtung 33 für das Fangelement 27 des Trennwandelementes T ist am letzten Einzelabschnitt 50 angeordnet, so daß die Fanghaken 34 in die Zuführöffnung 31 einführbar sind.

In der in Fig. 9 gezeigten Arbeitsphase der Rollballenpresse 1‴ ist der Rollballen R bereits fertiggestellt. Das freie Ende des Bindemittels 42 ist schon im Bereich der Zuführöffnung 31 angelangt und wird gerade mit dem anderen Ende des Bindemittels 42 verbunden. Das Trennwandelement T umschlingt den eingebundenen Rollballen R. Sein Fangelement 27 ist bereits von den Fanghaken 34 ergriffen. Der Zwischenspeicher Z ist mit weiterhin zugeführtem Erntegut 6 gefüllt. Unter dem erhöhten Anpreßdruck hat sich die Torschale 54 unter Nachgeben des Zuggliedes 57 etwas geöffnet. Hierfür könnte für die Rolle 56 eine einstellbare Rutschkupplung vorgesehen sein. Die Rolle 56 könnte wie auch der Kern 22 des Trennwandelementes T durch einen Hydromotor angetrieben werden, der bei Zug am Zugglied 57 oder am Trennwandelement wie eine Pumpe gegen ein einstellbares Überdruckventil arbeitet.

Sobald die Enden des Bindemittels 42 miteinander verbunden sind, wird das Zugglied 57 gelöst, wodurch sich die Torschale 54 um die Schwenkachse 55 abzusenken beginnt (Fig. 10). Zwischen den Einzelabschnitten 50 ist ein Streckantrieb 59 vorgesehen, der beispielsweise durch seitliche Ketten oder Stahlseile und eine Spannvorrichtung 60 gebildet wird. Auf diese Weise werden die Einzelabschnitte 50 soweit relativ zueinander verschwenkt, bis sie mit den Anschlagflächen 52 fest aneinanderliegen und auf diese Weise eine ebene und starre Ablaufplatte 61 bilden, deren Oberfläche von den Wickelwalzen 13 gebildet wird. Die Ablaufplatte 61 ist schräg zum Boden geneigt. Da gleichzeitig das Trennwandelement wie anhand von Fig. 1 erwähnt zurückgezogen und gespannt wird, läuft der fertige Rollballen auf der Abrollplatte 61 zum Boden, wobei die Spannung im Trennwandelement T diese Ausrollbewegung unterstützt.

Sobald der fertige eingebundene Rollballen R ausgeworfen worden ist, wird der Zug im Zugglied 59 aufgehoben und erneut das Zugglied 57 aufgewickelt. Das Tor 8' beginnt sich zu schließen. Die Fanghaken 34 werden vor dem vollständigen Schließen des Tores 8 vom Fangelement 27 gelöst, so daß das Trennwandelement T wieder in die in Fig. 1 gezeigte Ausgangsstellung zurückgezogen wird, in der es für den nächsten Binde- und Auswerfvorgang bereitgehalten ist.

Die in Fig. 11 gezeigte Rollballenpresse 1^IV unterscheidet sich von der in Fig. 1 gezeigten dadurch, das das Tor 8″ einteilig und starr und um eine obenliegende Schwenkachse 62 am Gehäuse wegschwenkbar ist. Ein nicht-gezeigter Hydraulikzylinder, ähnlich dem Hydraulikzylinder 16 von Fig. 1, steuert die Torbewegung. Das Tor 8″ besitzt eine starre Schale 63, in der wie Wickelwalzen 13 gelagert sind.

Die Zuführöffnung 31 für das Bindemittel 42 befindet sich im unteren Teil des Tors 8″. Die Fang- und Haltevorrichtung 33 mit den Fanghaken 34 ist im Gehäuse 3 vor dem unteren Rand der Torschale 63 angeordnet. Sie hat im Bogenmaß einen Abstand D von der Zuführöffnung 31. Das Trennwandelement T wird in Wickelrichtung vor der Mündung des Zuführkanals 5, z.B. durch eine Zuführöffnung 64, in die Wickelkammer 7 eingebracht. Strichliert ist angedeutet, daß das Trennwandelement T auch erst unmittelbar vor der Mündung des Zuführkanales 5 zugeführt werden könnte, und daß die Fanghaken 34 auch in Wickelrichtung unmittelbar hinter der Mündung des Zuführkanals 5 angeordnet sein könnten. Diese Ausbildung hat den Vorteil, daß nur eine verhältnismäßig kleine Trennwandelementlänge gebraucht und nur eine kleine Menge an Erntegut zwischengespeichert wird, weil das Trennwandelement T den Zwischenspeicher nur über den Teil der Drehbewegung des Rollballens zu bilden braucht, den das freie Ende des Bindemittels zwischen der Zuführöffnung 64 und der Zuführöffnung 31 durchläuft. Wenn die sich nach dem Fangen des Fangelementes durch die Fanghaken 34 bildende Schlaufe des Trennwandelementes T mit der Schlaufenspitze bis zur Zuführöffnung 31 reicht, liegt für das Bindemittel 42 ein Überlappungsbereich vor, der dem doppelten Wert des Abstandes D entspricht. Der Einbindevorgang des Rollballens ist dann, wenn das vordere Ende des Bindemittels die Zuführöffnung 64 erreicht, schon mehr als zur Hälfte abgeschlossen, so daß nur mehr eine relativ kurze Zeitspanne verstreicht, bis der Rollballen fertig eingebunden ist und ausgeworfen werden kann. Aus diesem Grund braucht der Zwischenspeicher nur eine kleine Menge des weiterhin zugeführten Erntegutes aufzunehmen. Bei dieser Ausbildung ist es allerdings erforderlich, sowohl das Einführende des Trennwandelementes T als auch das freie Ende des Bindemittels 42 mit Hilfseinrichtungen in die Wickelkammer 7 einzubringen, weil der Schwerkrafteinfluß bei dieser Ausbildung nicht nutzbar ist. Der durch das Spannen des Trennwandelementes beim Auswerfen erzeugte Kraftimpuls unterstützt das Auswerfen des fertig eingebundenen Rollballens aus der Wickelkammer 7.

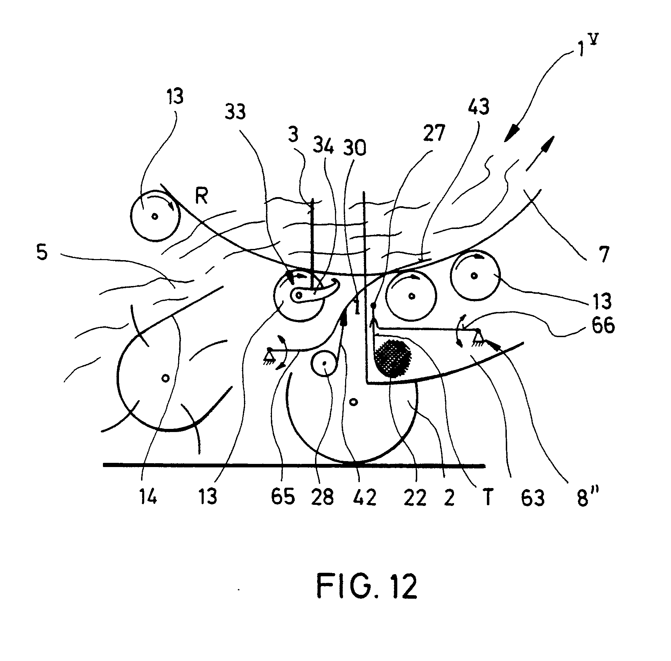

Die Rollballenpresse 1^V gemäß Fig. 12, von der nur der untere Teil schematisch gezeigt ist, besitzt wie die Rollballenpresse 1^IV der Fig. 11 ein einstückiges Tor 8″, das oben im Gehäuse schwenkbar gelagert ist, so daß der Rollballen R nach unten ausgeworfen werden kann.

Die Rollballenpresse 1^V unterscheidet sich von der vorhergehenden dadurch, daß die Rolle 28 für das Bindemittel 42 im Gehäuse 3 nahe der Schließfuge des Tors 8″ gelagert ist, und daß ein Zuführer 65 für das Bindemittel 42 dort vorgesehen ist, der das freie Ende des Bindemittels jeweils an die Umfangsfläche des Rollballens anlegt, ferner durch den an der Achse der in Wickelrichtung hinter der Mündung des Zuführkanals 5 liegenden Wickelwalze 13 schwenkbaren Fanghaken 34 der Fang- und Haltevorrichtung, und schließlich durch den im unteren Ende der Torschale 63 gelagerten Kern 22 mit dem Trennwandelement T. Auch dem Trennwandelement T ist ein Zuführer 66 zugeordnet, mit dem das Fangelement 27 des Trennwandelementes T jeweils an die Umfangsfläche des Rollballens angelegt wird.

Annähernd eine Umdrehung des Rollballens R vor dessen Fertigstellung wird das Bindemittel 42 mittels des Zuführers 65 in die Wickelkammer 7 eingeführt und vom Rolballen R mitgenommen. Wenn das freie Ende 43 des Bindemittels 42 den Bereich der Zuführung des Trennwandelementes T passiert hat, wird mit dem Zuführer 66 auch das Trennwandelement T mit dem Fangelement 27 eingeführt und mitgenommen. Der Rollballen R dreht sich mit dem Bindemittel 42 und dem Trennwandelement T über nahezu eine Umdrehung weiter, während welcher weiterhin zugeführtes Erntegut unter das Bindemittel eingebracht wird. Erst wenn das Fangelement 27 die Mündung des Zuführkanals passiert, wird die weitere Zufuhr des Ernteguts unter das Bindemittel unterbrochen und das Erntegut an der Außenseite des Trennwandelementens T zwischengespeichert. Nachdem Passieren der Mündung des Zuführkanals 5 wird das Fangelement 27 von den Fanghaken 34 ergriffen und festgehalten, so daß die Enden des Bindemittels 42 miteinander verbunden werden können. Bei 30 ist wieder eine Trennvorrichtung für das Bindemittel angedeutet. Es bildet sich, wenn überhaupt nur ein kleiner Zwischenspeicher mit einer kleinen Schlaufe, da die weitere Zufuhr des Ernteguts nur über eine kurze Zeitdauer erfolgt. Dabei kann das Tor 8″ bereits anfangen, sich langsam und mit Gegendruck zu öffnen, so daß das noch zugeführte Erntegut nicht unzweckmäßig stark komprimiert wird oder sich im Zuführkanal staut.

Sobald die Enden des Bindemittels 42 miteinander verbunden sind, schwenkt das Tor 8″ rasch hoch. Die Auswurföffnung für den Rollballen wird freigegeben. Da das Fangelement 27 noch in den Fanghaken 34 hängt und das Trennwandelement T gespannt bzw. zurückgezogen wird, wird der fertige Rollballen ausgestoßen. Wie schnell der Rollballen ausgestoßen wird, spielt keine besondere Rolle, da durch das gespannte Trennwandelement ein großer Raum zum lockeren Zuführen des Ernteguts freigegeben ist.

Nachdem Ausstoßen des Rollballens R wird das Tor 8″ wieder geschlossen, zuvor oder dabei das Trennwandelement T aufgewickelt und schließlich das Fangelement 27 freigegeben, bis das Fangelement 27 wieder in die in Fig. 12 gezeigte Position zurückgelangt ist.

## Patentansprüche

1. Rollballenpresse für Erntegut, mit einer von in Wickelrichtung antreibbaren Preßelementen (13) begrenzten Wickelkammer (7), mit einer Gutaufnahme- und Zuführvorrichtung (14) in einem in die Wickelkammer (7) mündenden Zuführkanal (5), und mit einem Zwischenspeicher (Z) zum Aufnehmen des während des Einbindens und Auswerfens des Rollballens weiterhin aufgenommenen Gutes (6), wobei der Zwischenspeicher (Z) während des Einbindens und Auswerfens eines fertigen Rollballens (R) durch ein in die Wickelkammer (7) einführbares Trennwandelement (T) vom Rollballen (R) getrennt wird, **dadurch gekennzeichnet,** daß eine Vorrichtung zum Einführen eines Bindemittels in die Wickelkammer vorhanden ist, daß das Trennwandelement (T) eine an die Kontur des Rollballens (R) anpaßbare Bahn (25) mit einem freien Einführende (26) ist, daß das Trennwandelement (T) mit seinem Einführende (26) in Wickelrichtung des Rollballens (R) vor der Mündung des Zuführkanals (5) in die Wickelkammer (7) einführbar und durch den Rollballen (R) über die Mündung hinweg mitnehmbar ist, daß in Wickelrichtung hinter der Mündung des Zuführkanals (5) eine Fang- und Haltevorrichtung (33) zum vorübergehenden Festhalten des Einführendes (26) des Trennwandelementes (T) vorgesehen ist, und daß der Zwischenspeicher (Z) in der Wickelkammer (7) zwischen dem mit seinem Einführende (26) festgehaltenen Trennwandelement (T) und den Preßelementen (13, 13', 13″) der Wickelkammer (7) herstellbar ist.

2. Rollballenpresse nach Anspruch 1, **dadurch gekennzeichnet,** daß eine Vorrichtung (22, 23) zum Bereithalten und Einführen des Einführendes (26) des Trennwandelementes (T) in die Wickelkammer (7) und eine Rückzugseinrichtung (23, 24) zum Herausziehen des Trennwandelementes (T) aus der Wickelkammer (7) vorgesehen sind.

3. Rollballenpresse nach Anspruch 1, **dadurch gekennzeichnet,** daß das Trennwandelement (T) am Einführende (26) ein Fangelement (27), vorzugsweise einen Querstab, aufweist.

4. Rollballenpresse nach Anspruch 1, **dadurch gekennzeichnet,** daß das Trennwandelement (T) eine, vorzugsweise beschichtete, Textilbahn (25), eine Netz- oder Gitterbahn, eine Kunststoff- oder Metallfolie oder aus gelenkig und relativ zueinander abknickbar miteinander verbundenen Abschnitten zusammengesetzt ist, wobei die Gelenkachsen annähernd parallel zur Achse der Wickelkammer (7) liegen.

5. Rollballenpresse nach Anspruch 1, **dadurch gekennzeichnet,** daß das Trennwandelement (T) im Gehäuse (3) der Rollballenpresse auf einem außerhalb der Wickelkammer (7) gelagerten Kern (22) aufgewickelt bereitgehalten wird, und daß ein, gegebenenfalls am Kern (22) angreifender, Antrieb (23) vorgesehen ist, um das Einführende (26) des Trennwandelementes (T) in die Wickelkammer (7) einzuführen und das abgewickelte Trennwandelement (T) zu spannen bzw. zurückzuziehen.

6. Rollballenpresse nach Anspruch 5, **dadurch gekennzeichnet,** daß eine Abzugsbremse und/oder eine Rückzugsfeder (24) für das Trennwandelement (T) vorgesehen ist.

7. Rollballenpresse nach den Ansprüchen 1 und 3, **dadurch gekennzeichnet,** daß die Fang- und Haltevorrichtung (33) wenigstens einen in die Wickelkammer (7) einführbaren Fanghaken (34) für den Querstab aufweist.

8. Rollballenpresse nach Anspruch 1, **dadurch gekennzeichnet,** daß eine Trennwandelement-Zuführöffnung (31, 64) zur Wickelkammer (7) vorgesehen ist, die sich bei einer Wickelrichtung von der Auswurföffnung nach oben und zurück zur Mündung des Zuführkanals (5) zwischen einer Bindemittel-Zuführöffnung (31) und der Mündung des Zuführkanals (5) befindet.

9. Rollballenpresse nach Anspruch 8, **dadurch gekennzeichnet,** daß die Trennwandelement-Zuführöffnung (31) mit der Bindemittel-Zuführöffnung vereinigt ist.

10. Rollballenpresse nach einem der Ansprüche 1 bis 9, **dadurch gekennzeichnet,** daß die Fang- und Haltevorrichtung (33) in Wickelrichtung zwischen der Mündung des Zuführkanals (5) und der Bindemittel-Zuführöffnung (31) angeordnet ist.

11. Rollballenpresse nach Anspruch 1, **dadurch gekennzeichnet,** daß das Bindemittel (42) und das Trennwandelement (T) in einem obenliegenden Bereich der Wickelkammer (7) unter Schwerkrafteinfluß zugeführt werden.

12. Rollballenpresse nach wenigstens einem der Ansprüche 1 bis 11, **dadurch gekennzeichnet,** daß die Auswurföffnung durch ein schalenförmiges, oben am Gehäuse schwenkbar gelagertes Tor verschließbar ist, daß die Trennwandelement-Zuführöffnung (64) benachbart zu der Mündung des Zuführkanals (5) liegt, daß die Bindemittel-Zuführöffnung (31) im Tor (8"), vorzugsweise in dessen unterer Hälfte, liegt, und daß die Fang- und Haltevorrichtung (33) zwischen der Mündung des Zuführkanals (5) und der unteren Schließfuge des Tors (8") am Gehäuse (3) angeordnet ist.

13. Rollballenpresse nach einem der Ansprüche 1 bis 11, **dadurch gekennzeichnet,** daß ein nach oben schwenkbares Tor (8") vorgesehen ist, daß das Trennwandelement (T) im nach oben schwenkbaren Tor (8") nahe dessen unterer Schließfuge angeordnet ist, daß das Bindemittel (42) zwischen dem Trennwandelement (T) und der Mündung des Zuführkanals (5) im Gehäuse (3) angeordnet ist, und daß Fang- und Haltevorrichtung (33) zwischen der Mündung des Zuführkanals (5) und dem Bindemittel (42) im Gehäuse (3) untergebracht ist.

14. Rollballenpresse nach den Ansprüchen 12 und 13, **dadurch gekennzeichnet,** daß mechanische Zuführer (65,66) für das Bindemittel (42) und das Trennwandelement (T) vorgesehen sind.

15. Rollballenpresse nach einem der Ansprüche 1 bis 11, **dadurch gekennzeichnet,** daß die Preßelemente über den Wickelkammerumfang verteilte Wickelwalzen oder förderbandartige Wickeleinheiten sind, von denen einige in wenigstens einem zum Auswerfen des Rollballens am Gehäuse schwenkbar gelagerten Tor zur Wickelkammer untergebracht sind, daß das Tor (8) aus einer unteren, nahe dem Zuführkanal (5) schwenkbar gelagerten Torhälfte (11) und aus einer oberen schwenkbar gelagerten Torhälfte (9) besteht, die zangenartig relativ zueinander bewegbar sind und im geschlossenen Zustand eine Schließfuge (32) bilden, daß die Schließfuge (32) unterhalb einer die Wickelkammerachse enthaltenden Horizontalebene liegt, und daß die untere Torhälfte (11) soweit nach unten schwenkbar ist, daß die Oberfläche des in dieser Hälfte angeordneten Preßelementes (13, 13', 13") bzw. die Oberflächen der in dieser Torhälfte angeordneten Preßelemente (13, 13', 13") tiefer als der tiefste Punkt der Wickelkammer (7) bei geschlossenem Tor (8) liegt.

16. Rollballenpresse nach Anspruch 15, **dadurch**

**gekennzeichnet,** daß die Schwenkachse (12) der unteren Torhälfte (11) in etwa mit der Schwenkachse eines zwischen der Mündung des Zuführkanals (5) und der unteren Torhälfte (11) gehäusefest gelagerten Preßelementes (13', 13) zusammenfällt.

17. Rollballenpresse nach den Ansprüchen 15 und 16, **dadurch gekennzeichnet,** daß an den Torhälften (9, 11) Schließantriebe (15), vorzugsweise doppelseitig beaufschlagbare Hydraulikzylinder (16, 17), mit vorbestimmter, im Hinblick auf den Anpreßdruck des Ernteguts (6) derart begrenzter Schließkraft angreifen, daß die Torhälften (9, 11) beim Einbinden des Rollballens (R) und Füllen des Zwischenspeichers (Z) in Richtung auf die Öffnungsstellung nachgeben und das Volumen der Wickelkammer (7) vergrößern.

18. Rollballenpresse nach einem der Ansprüche 15 bis 17, **dadurch gekennzeichnet,** daß die Fang- und Haltevorrichtung (33) an der unteren Torhälfte (11) nahe der Schließfuge (32) angeordnet ist.

19. Rollballenpresse, nach einem der Ansprüche 1 bis 11, **dadurch gekennzeichnet,** daß eine Auswurföffnung der Wickelkammer (7) durch ein am Gehäuse schwenkbar gelagertes Tor (8') verschließbar ist, daß das Tor (8') um eine untenliegende, der Mündung des Zuführkanals (5) benachbarte Schwenkachse (55) schwenkbar ist, und aus relativ zueinander schwenkbaren, aneinander starr abstützbaren Einzelabschnitten (50) mit zur Wickelkammerachse parallelen Schwenkachsen (51) besteht, die bei geschlossenem Tor (8') eine Torschale (54) für die Wickelkammer (7) und bei geöffnetem Tor (8') eine gestreckte, außerhalb der Wickelkammer (7) liegende Ablaufplatte (61) für den Rollballen (R) bilden, und daß am Gehäuse (3) ein obenliegender, am letzten Einzelabschnitt (50) angreifender Torschalen-Schließantrieb (56, 57) und ein untenliegender Ablaufplatten-Streckantrieb (60, 59) vorgesehen sind.

20. Rollballenpresse nach Anspruch 19, **dadurch gekennzeichnet,** daß die Fang- und Haltevorrichtung (33) beim letzten, freien Einzelabschnitt (50) am Tor (8') vorgesehen ist.

## Claims

1. Rotobaler for crop material with a winding chamber (7) defined by pressing elements (13) which may be driven in a winding direction, with a material pick up and feed device (14) in a feed passage (5) discharging into the winding chamber (7) and with an intermediate store (Z) for receiving further material (6) which is picked up during the binding and ejection of the rotobale, whereby during the binding and ejection of a finished rotobale (R) the intermediate store (Z) is separated from the rotobale (R) by a separating wall element (T) which may be introduced into the winding chamber (7), characterised in that a device is present for introducing a binder into the winding chamber, that the separating wall element (T) is a web (25) having a free leading end, which web may be matched to the contour of the rotobale (R), that the leading end (26) of the separating wall element (T) in the winding direction of the rotobale (R) may be introduced into the winding chamber (7) in front of the mouth of the feed passage and may be carried by the rotobale (R) beyond the mouth, that there is a catching and retaining device (33) provided behind the mouth of the feed passage (5) in the winding direction for temporarily holding the leading end (26) of the separating wall element (T) and that the intermediate store (Z) may be produced in the winding chamber (7) between the separating wall element (T), whose leading end (26) is held, and the pressing elements (13, 13', 13") of the winding chamber (7).

2. Rotobaler as claimed in Claim 1, characterised in that a device (22, 23) for holding and introducing the leading end (26) of the separating wall element (T) into the winding chamber (7) and a restoring device (23, 24) for withdrawing the separating wall element (T) out of the winding chamber (7) are provided.

3. Rotobaler as claimed in Claim 1, characterised in that the separating wall element (T) has a catching element (27), preferably a transverse rod, at the leading end (26).

4. Rotobaler as claimed in Claim 1, characterised in that the separating wall element (T) is constituted by a, preferably coated, textile web (25), a net or grid web, a plastics or metal film or sections jointedly connected together so as to be bendable relative to one another, the joint axes being approximately parallel to the axis of the winding chamber (7).

5. Rotobaler as claimed in Claim 1, characterised in that the separating wall element (T) is held wound up in the housing (3) of the rotobaler on a core (22) mounted outside the winding chamber (7) and that a drive (23) is provided, optionally acting on the core (22) , in order to introduce the leading end (26) of the separating wall element (T) into the winding chamber (10) and to stretch or withdraw the unwound separating wall element (T).

6. Rotobaler as claimed in Claim 5, characterised in that a withdrawal brake and/or a restoring spring (24) are provided for the separating wall element (T).

7. Rotobaler as claimed in Claims 1 and 3, characterised in that the catching and retaining device (33) has at least one catching hook (34) adapted to catch the transverse rod, which hook may be introduced into the winding chamber (7).

8. Rotobaler as claimed in Claim 1, characterised in that a separating wall element feed opening (31, 64) into the winding chamber (7) is provided which is situated between a binder feed opening (31) and the mouth of the feed passage (5) with a winding direction upwardly from the ejection opening and back to the mouth of the feed passage (5).

9. Rotobaler as claimed in Claim 8, characterised in that the separating wall element feed opening (31) is combined with the binder feed opening.

10. Rotobaler as claimed in one of Claims 1 to 9, characterised in that the catching and retaining device (33) is arranged between the mouth of the feed passage (5) and the binder feed opening (31) in the winding direction.

11. Rotobaler as claimed in Claim 1, characterised in that the binder (42) and the separating wall element (T) are fed in in an upper region of the winding chamber (7) under the influence of gravity.

12. Rotobaler as claimed in at least one of Claims 1 to 11, characterised in that the ejection opening is closable by a shell-shaped door pivotally mounted on the housing at the top, that the separating wall element feed opening (64) is adjacent to the mouth of the feed passage (5), that the binder feed opening (31) is in the door (8") , preferably in its lower half, and that the catching and retaining device (33) is arranged between the mouth of the feed passage (5) and the lower closure gap of the door (8") on the housing.

13. Rotobaler as claimed in one of Claims 1 to 11, characterised in that an upwardly pivotable door (8") is provided, that the separating wall element (T) is arranged in the upwardly pivotable door (8") near to its lower closure gap, that the binder (42) is arranged in the housing (3) between the separating wall element (T) and the mouth of the feed passage (5) and that the catching and retaining device (33) is accommodated in the housing (3) between the mouth of the feed passage (5) and the binder (42).

14. Rotobaler as claimed in Claims 12 and 13, characterised in that mechanical feed mechanisms (65, 66) are provided for the binder (42) and the separating wall element (T).

15. Rotobaler as claimed in one of Claims 1 to 11, characterised in that the pressing elements are winding rollers or conveyor belt-like winding units distributed over the winding chamber periphery, some of which are accommodated in at least one door to the winding chamber which is pivotally mounted on the housing for ejecting the rotobale, that the door (8) comprises a lower door half (11) pivotally mounted near to the feed passage (5) and an upper pivotally mounted door half (9), which are movable relative to one another in the manner of pincers and in the closed state define a closure gap (32), that the closure gap (32) lies below the horizontal plane containing the winding chamber axis and that the lower door half (11) is pivotable downwardly so far that the surface of the pressing element (13, 13', 13") arranged in this half or the surfaces of the pressing elements (13, 13', 13") arranged in this door half is lower than the lowest point of the winding chamber (7) when the door (8) is closed.

16. Rotobaler as claimed in Claim 15, characterised in that the pivotal axis (12) of the lower door half (11) coincides approximately with the pivotal axis of a pressing element (13', 13) fixedly mounted on the housing between the mouth of the feed passage (5) and the lower door half (11).

17. Rotobaler as claimed in Claim 15 and 16, characterised in that closure drives (15), preferably double-acting hydraulic cylinders (16, 17), engage the door halves (9, 11) with a predetermined closure force which is so limited with regard to the pressure of the crop material (6) that the door halves (9, 11) yield in the direction towards the open position on binding of the rotobale (R) and filling of the intermediate store (Z) and increase the volume of the winding chamber (7).

18. Rotobaler as claimed in one of Claims 15 to 17, characterised in that the catching and retaining device (33) is arranged on the lower door half (11) near to the closure gap (32).

19. Rotobaler as claimed in one of Claims 1 to 11, characterised in that an ejection opening from the winding chamber (7) may be closed by a door (8') pivotally mounted on the housing, that the door (8') is pivotable about a lower pivotal axis (55) adjacent to the mouth of the feed passage (5) and comprises individual sections (50), which are pivotable relative to one another and may be rigidly braced against one another, with pivotal axes (51) parallel to the winding chamber axis, which units form a door shell (54) for the winding chamber (7) when the door (8') is closed and an elongate discharge plate (61) outside the winding chamber (7) for the rotobale (R) when the door (8') is open and that provided on the housing (3) there are an upper door shell closure drive (56, 57) engaging the last individual section (50) and a lower discharge plate linear drive (60, 59).

20. Rotobaler as claimed in Claim 19, characterised in that the catching and retaining device (33) is provided on the door (8') at the last, free individual section (50).

## Revendications

1. Ramasseuse-presse à enroulement pour produits récoltés, comprenant une chambre d'enroulement (7) délimitée par des éléments de compression (13) entraînés dans le sens de l'enroulement, un dispositif (14) de ramassage de produit et d'alimentation, prévu dans un canal d'alimentation (5) débouchant dans la chambre d'enroulement (7), ainsi qu'un accumulateur intermédiaire (Z) pour recevoir le produit (6) qui continue d'être ramassé pendant le liage et l'éjection de la balle roulée, l'accumulateur intermédiaire (Z) étant séparé de la balle roulée (R), pendant le liage et l'éjection d'une balle roulée (R) finie, par un élément de cloisonnement (T) pouvant être introduit dans la chambre d'enroulement (7), **caractérisée en ce** qu'un dispositif est prévu pour introduire un lien dans la chambre d'enroulement, que l'élément de cloisonnement (T) est une bande (25) adaptable au contour de la balle roulée (R) et possédant une extrémité d'introduction (26) libre, que l'élément de cloisonnement (T) peut être introduit dans la chambre d'enroulement (7), avec son extrémité d'introduction (26) en premier, avant l'embouchure du canal d'alimentation (5), dans le sens d'enroulement de la balle roulée (R), et peut être entraîné par la balle roulée (R) au-delà de l'embouchure, qu'un dispositif (33) d'arrêt et de retenue est prévu derrière l'embouchure du canal d'alimentation (5), dans le sens d'enroulement, pour retenir temporairement l'extrémité d'introduction (26) de l'élément de cloisonnement (T), et que l'accumulateur intermédiaire (Z) est formé dans la chambre d'enroulement (7) entre l'élément de cloisonnement (T) dont l'extrémité d'introduction (26) est retenue et les éléments de compression (13, 13', 13") de la chambre d'enroulement (7).

2. Ramasseuse-presse à enroulement selon la revendication 1, **caractérisée en ce** qu'elle comprend un dispositif (22, 23) pour tenir prête et introduire dans la chambre d'enroulement (7) l'extrémité d'introduction (26) de l'élément de cloisonnement (T), ainsi qu'un dispositif de rappel (23, 24) pour retirer cet élément (T) hors de la chambre d'enroulement (7).

3. Ramasseuse-presse à enroulement selon la revendication 1, **caractérisée en ce** que l'élément de cloisonnement (T) comporte un embout d'accrochage (27), de préférence une barre transversale, à son extrémité d'introduction (26).

4. Ramasseuse-presse à enroulement selon la revendication 1, **caractérisée en ce** que l'élément de cloisonnement (T) est une bande (25) de matière textile, de préférence enduite, une bande formée d'un filet ou d'un treillis, d'une feuille de matière plastique ou de métal, ou est constitué de tronçons reliés les uns aux autres par des articulations et pouvant être fléchis les uns par rapport aux autres, les axes d'articulation étant sensiblement parallèles à l'axe de la chambre d'enroulement (7).

5. Ramasseuse-presse à enroulement selon la revendication 1, **caractérisée en ce** que l'élément de cloisonnement (T) est maintenu prêt à être utilisé, dans le bâti (3) de la ramasseuse-presse, à l'état enroulé sur un mandrin (22) monté rotatif à l'extérieur de la chambre d'enroulement (7) et qu'un entraînement (23) est prévu, attaquant éventuellement le mandrin (22) directement, pour faire entrer l'extrémité d'introduction (26) de l'élément (T) dans la chambre d'enroulement (7) et pour tendre et tirer en arrière l'élément de cloisonnement (T) déroulé.

6. Ramasseuse-presse à enroulement selon la revendication 5, **caractérisée en ce** qu'un frein de dévidage et/ou un ressort de rappel (24) est prévu pour l'élément de cloisonnement (T).

7. Ramasseuse-presse à enroulement selon les revendications 1 et 3, **caractérisée en ce** que le dispositif (33) d'arrêt et de retenue comporte au moins un crochet (34) pour saisir la barre transversale, crochet qui peut être engagé dans la chambre d'enroulement (7).

8. Ramasseuse-presse à enroulement selon la revendication 1, **caractérisée en ce** qu'elle possède une ouverture d'amenée (31, 64) pour l'introduction de l'élément de cloisonnement dans la chambre d'enroulement (7), ouverture qui est située entre une ouverture d'amenée (31) du lien et l'embouchure du canal d'alimentation (5) au cas où le sens d'enroulement de la balle va depuis l'ouverture d'éjection vers le haut puis, en descendant, vers l'embouchure du canal d'alimentation (5).

9. Ramasseuse-presse à enroulement selon la revendication 8, **caractérisée en ce** que l'ouverture d'amenée (31) pour l'élément de cloisonnement est combinée avec l'ouverture d'amenée pour le lien.

10. Ramasseuse-presse à enroulement selon une des revendications 1 à 9, **caractérisée en ce** que le dispositif (33) d'arrêt et de retenue est installé entre l'embouchure du canal d'alimentation (5) et l'ouverture d'amenée (31) pour le lien, dans le sens d'enroulement.

11. Ramasseuse-presse à enroulement selon la revendication 1, **caractérisée en ce** que le lien (42) et l'élément de cloisonnement (T) sont introduits par gravité à partir d'une zone située en haut par rapport à la chambre d'enroulement (7).

12. Ramasseuse-presse à enroulement selon au moins une des revendications 1 à 11, **caractérisée en ce** que l'ouverture d'éjection est normalement fermée par un hayon en forme de coquille, monté pivotant en haut sur le bâti, que l'ouverture d'amenée (64) de l'élément de cloisonnement est située près de l'embouchure du canal d'alimentation (5), que l'ouverture d'amenée (31) du lien est située dans le hayon (8"), de préférence dans sa moitié inférieure, et que le dispositif (33) d'arrêt et de retenue est installé sur le bâti (3) entre l'embouchure du canal d'alimentation (5) et le joint de fermeture en bas du hayon (8").

13. Ramasseuse-presse à enroulement selon une des revendications 1 à 11, **caractérisée en ce** qu'elle comprend un hayon (8") relevable par pivotement, que l'élément de cloisonnement (T) est monté dans le hayon (8") relevable, près de son joint de fermeture en bas, que l'amenée du lien (42) est prévue dans le bâti (3) entre l'élément de cloisonnement (T) et l'embouchure du canal d'alimentation (5) et que le dispositif (33) d'arrêt et de retenue est installé dans le bâti (3) entre l'embouchure du canal d'alimentation (5) et l'amenée du lien (42).

14. Ramasseuse-presse à enroulement selon les revendications 12 et 13, **caractérisée en ce** que des ameneurs mécaniques (65, 66) sont prévus pour le lien (42) et l'élément de cloisonnement (T).

15. Ramasseuse-presse à enroulement selon une des revendications 1 à 11, **caractérisée en ce** que les éléments de compression sont des cylindres d'enroulement ou des unités d'enroulement semblables à des convoyeurs à bande, qui sont répartis sur la périphérie de la chambre d'enroulement et dont quelques-uns sont logés dans au moins un hayon monté pivotant sur le bâti et permettant l'éjection de la balle roulée hors de la chambre d'enroulement, que le hayon (8) est composé d'une moitié inférieure (11) montée pivotante près du canal d'alimentation (5) et d'une moitié supérieure (9), également montée pivotante, qui sont déplaçables l'une par rapport à l'autre à la façon d'une pince et forment un joint de fermeture (32) en position fermée, que le joint de fermeture (32) est situé sous un plan horizontal contenant l'axe de la chambre d'enroulement et que la moitié inférieure (11) du hayon peut être abaissée, par pivotement, à tel point que la surface de l'élément de compression (13, 13', 13") disposé dans cette moitié, ou les surfaces des éléments de compression (13, 13', 13") disposés dans cette moitié du hayon, est ou sont située(s) au-dessous du point le plus bas de la chambre d'enroulement (7) lorsque le hayon (8) est fermé.

16. Ramasseuse-presse à enroulement selon la revendication 15, **caractérisée en ce** que l'axe de pivotement (12) du demi-hayon inférieur (11) coïncide à peu près avec l'axe de pivotement ou de rotation d'un élément de compression (13', 13) monté en un point fixe du bâti entre l'embouchure du canal d'alimentation (5) et le demi-hayon inférieur (11).

**17.** Ramasseuse-presse à enroulement selon les revendications 15 et 16, **caractérisée en ce** que les demi-hayons (9, 11) sont attaqués par des commandes de fermeture (15), constituées de préférence par des vérins hydrauliques (16, 17) à double effet, qui exercent une force de fermeture limitée, prédéterminée, qui est fonction de la pression à exercer sur le produit (6), de manière que, lors du liage de la balle roulée (R) et du remplissage de l'accumulateur intermédiaire (Z), les demi-hayons (9, 11) s'écartent en direction de la position d'ouverture, et augmentent ainsi le volume de la chambre d'enroulement (7).

**18.** Ramasseuse-presse à enroulement selon une des revendications 15 à 17, **caractérisée en ce** que le dispositif (33) d'arrêt et de retenue est installé sur le demi-hayon inférieur (11), près du joint de fermeture (32).

**19.** Ramasseuse-presse à enroulement selon une des revendications 1 à 11, **caractérisée en ce** qu'une ouverture d'éjection de la chambre d'enroulement (7) est normalement fermée par un hayon (8') monté pivotant sur le bâti, que le hayon (8') pivote autour d'un axe de pivotement (55) situé en bas, près de l'embouchure du canal d'alimentation, et est constitué de segments (50) disposés mutuellement pivotants et pouvant s'appuyer rigidement les uns sur les autres, segments dont les axes de pivotement (51) sont parallèles à l'axe de la chambre d'enroulement (7) et qui forment un hayon en coquille (54) pour cette chambre lorsque le hayon (8') est fermé et un panneau de descente (61) pour la balle roulée (R) lorsque le hayon (8') est ouvert, panneau qui est étendu à l'extérieur de la chambre d'enroulement (7), et qu'une commande de fermeture (56, 57) du hayon en coquille, située en haut et attaquant le dernier segment (50), ainsi qu'une commande d'extension (60, 59) du panneau de descente, située en bas, sont prévues sur le bâti (3).

**20.** Ramasseuse-presse à enroulement selon la revendication 19, **caractérisée en ce** que le dispositif (33) d'arrêt et de retenue est prévu près du dernier segment libre (50) du hayon (8').

# FIG.1

# FIG.5

# FIG.6

**FIG.2**

**FIG.4**

**FIG.3**

FIG.7

FIG.8

FIG.9

FIG.10

FIG.11

FIG. 12